# EUROPEAN PATENT SPECIFICATION

(11) **EP 2 145 918 B1**
(45) Date of publication and mention of the grant of the patent: **14.09.2011**
(21) Application number: 08012950.5
(22) Date of filing: 17.07.2008
(51) Int. Cl.: C08J 7/04, C09D 5/14

(54) **Antimicrobial coatings comprising a complex of an ionic fluoropolymer and an antimicrobial counter-ion**
Antimikrobielle Beschichtungen mit einem Komplex aus einem ionischen Fluorpolymer und einem antimikrobiellen Gegenion
Revêtements antimicrobiens comprenant un complexe d'un fluoropolymère ionique et d'un contre-ion antimicrobien

(43) Date of publication of application: 20.01.2010
(73) Proprietor: W.L. Gore & Associates GmbH, 85640 Putzbrunn (DE)
(72) Inventor: Bürger, Wolfgang, 84424 Burgrain (DE); Steffl, Rudolf, 87466 Oy-Mittelberg (DE)
(74) Representative: Kador & Partner

(56) References cited:
- WO-A-2007/025293
- DE-A1- 3 832 828
- FR-A- 2 024 291
- US-A- 5 540 837
- US-A1- 2005 287 111
- US-A1- 2006 266 642

## Description

The invention relates to an article comprising a substrate and a coating thereon comprising an ionic fluoropolymer and a counter-ionic agent wherein the article has antimicrobial and/or antifungal properties. The invention further relates to a process for the production of such an article and to the use of such an article in various applications.

The surface of articles used in a broad range of applications, including garments, filters, and membranes, is exposed to the natural environment which means that it is subjected to a variety of different temperature, humidity, pH and abrasion conditions, as well as to the contamination with microorganisms. It is known that microbiological species such as microbes or fungi easily accumulate at such surfaces, proliferate there, and hence adversely affect the functionality of the article.

Antimicrobial effects of cationic metallic ions such as Ag, Au, Pt, Pd, Ir and Cu, Sn, Bi and Zn are known (Morton, H.E., Pseudomonas in Disinfection, Sterilization and Preservation, ed. S.S. Block, Lea and Febinger, 1977). US 5,985,308 describes a method to prepare anti-microbial silver complexes in water or alcohol based electrolytes from vapour deposited metallic layers.

Organic cationic antimicrobial active species, like polymers from N-alkylated 4-vinyl pyridine, quaternized ethyleneimine, quaternized acrylic acid derivatives and their copolymers, are also known and are summarized by A.D. Fuchs and J.C. Tiller, Angew. Chem. 2006, 118, 6911-6914.

US 2005/0287111 A1 discloses articles having thim films of polyelectrolyte complexes thereon which comprise interpenetrating networks of charged polyelectrolyte compositions. The articles are adapted to promote cell adhesion and growth, or to inhibit cell adhesion in living tissue or marine environments.

It is furthermore known to functionalize substrates by the use of a coating in order to impart antimicrobial properties to the substrate. However, it is a demanding requirement for such a coating that it must have a good adherence to the substrate in order to functionalise it permanently, i.e. in order to not easily being washed off.

Still further, the coating should not or only to a small degree adversely affect the desired inherent properties of the substrate. For example, in the case of a microporous polytetrafluoroethylene (PTFE) membrane used for filtration or venting the coating must not be easily washed off and at the same time it should not impair the fluid flow through the pores.

It is thus an object of the invention to provide a coating for substrates which allows to impart durable antimicrobial properties to the substrate and allows to tailor those properties. Simultaneously, the coating should have good and permanent adhesion to the substrate, should be easily preparable and applicable, should be evenly and homogeneously distributable on the substrate, and should be able to withstand the different environment conditions the coated substrate is exposed to.

It has now surprisingly been found that these objects can be achieved by forming a coating on a substrate comprising two components - an ionic fluoropolymer, i.e. a fluoropolymer which comprises ionic groups, and a counter ionic agent bearing ionic charges opposite to that of the ionic groups of the fluoropolymer and having antimicrobial properties - in the form of a complex.

The present invention therefore provides an article comprising a substrate and a coating thereon comprising a complex of an ionic fluoropolymer and a counter-ionic agent comprising ions having antimicrobial activity which are selected from ions of Ag, Zu, Cu, Au, Pt, Pd, Ir, Sn and Bi and combinations of these ions or a precursor thereof with quaternized ammonium compounds and/or cationic polyelectrolytes.

The term "antimicrobial activity" as used herein is intended to denote any activity in killing microorganisms such as bacteria, fungues, and viruses.

The coating concept of the present invention, including the two components ionic fluoropolymer and counter-ionic agent comprising ions having antimicrobial activity, provides, on the one hand, for excellent film forming properties and adhesion of the coating on a polymeric substrate mainly based on the properties of the complexed ionic fluoropolymer in the coating. On the other hand, the concept simultaneously allows for imparting antimicrobial properties to the substrate and for the improvement and tailoring of a variety of further properties of the substrate.

Thus, an article with highly water stable antimicrobial coating is obtained.

The use of such coatings provides antimicrobial properties in combination with contamination resistance as measured by oleophobicity. These coatings furthermore may prevent biofilm buildup and/or allow the combat of biofilms. Biofilms are complex aggregations of microorganism marked by the excretion of a protective and adhesive matrix.

The coating concept of the present invention is particularly attractive in the case of a coating on a porous substrate which is present on the inner and outer surface of the pores, as the outer and the inner side is protected from bacteria and/or biofilm. Thus, other properties, such as breathability and air permeability of the porous substrate can be maintained over a long time.

For example, in form of a fabric laminate, the antimicrobial coating on a microporous membrane allows antimicrobial efficacy for an extended period of time.

Additionally, such an antimicrobial treated microporous laminate might have the potential to reduce odors, for instance body odor.

The antimicrobial effect of the coating is caused by the ions having antimicrobial activity. Under certain cation exchange reaction conditions, these ions become mobile and active. This situation might be given under laundry conditions, at medium and high relative humidity and during active movement in a garment when sweat and moisture is generated.

Articles according to the invention may be used in garments such as in garments for protection, comfort and functionality including sporting goods and garments, and gloves, hunting apparel, military fabrics, workwear for garbage workers, in textile structures such as a shoe or shoe insert or textile covers in hospitals and guest rooms, in laminates. The articles according to this invention may also be used in filter elements such as for filtration or microfiltration of liquids and/or gases, in venting elements such as for venting of vessels and containers, in sensors, in diagnostic devices, in protective enclosures, in separation elements, and in consumer healthcare articles, such as sterile packaging, clothing and footwear, personal hygiene products, medical devices like catheters, implants, tubes, wound closures including suture yarn, and dressings.

The invention allows the production of coated articles passing the "Zone of Inhibition" test for 24 h, preferably 48 h or more.

The use of ionic fluoropolymers and ions having antimicrobial activity as the counter ionic agent provides unique balance of antistatic properties, oleophobic performance, hydrophobic and /or hydrophilic properties, breathability and at the same time durable antibacterial activity.

Depending on the coating form, monolithic layer or inner coatings, the air flow properties also may easily be adjusted. In the case of coatings present on the inner surface of the pores it is particularly advantageous that the growth of bacteria is inhibited on the surface and within the pores.

The articles of the invention moreover may be provided with enhanced moisture vapor transmission rates (MVTR) and, at the same time, water impermeability, excellent resistance against chemicals, excellent UV-degradation resistance and mechanical stability. The articles may furthermore have an improved balance of permeability and MVTR values.

The substrate may comprise an organic or an inorganic material such as synthetic and/or natural polymers, and composites of synthetic and/or natural polymers.

In one embodiment, the substrate is a non-conducting substrate on which a coating can be applied. Non-conducting means that the substrate has a specific surface resistance higher than 10¹⁰ Ohm/square at 23°C and 50 % relative humidity.

The substrate can be a film, a membrane, a textile or a laminate. The substrate may be a fabric and may be woven, non-woven, felt or knit. The substrate may be also fibres such as monofilaments, multifilaments, or yarns, including microdenier fibers and garns.

The substrate can be a dielectric substrate.

In one embodiment, the substrate is a polymeric substrate. In this embodiment, the polymeric substrate may be any kind of polymer such as synthetic, natural polymers and/or composites of synthetic and/or natural polymers.

Polymeric substrates are known to have a low surface energy, in contrast e.g. to metals or metal oxides. The polymeric substrate of the article of the invention in one embodiment has a surface energy of 100 mN/m or less, and in a further embodiment has a surface energy of 40 mN/m or less.

The substrate on which the coating is present in one embodiment has a thickness of 1 to 1 000 micrometer, in a further embodiment has a thickness of 3 to 500 micrometer, and in still a further embodiment has a thickness of 5 to 100 micrometer. Further layers of the same or a different material may be combined with the coated substrate.

In one embodiment, the substrate is a fluoropolymer, i.e. a polymer which contains fluorine atoms, and in a further embodiment, the substrate is a fluoropolyolefin.

The substrate may include fillers.

The fluoropolymer may be partially fluorinated or fully fluorinated, i.e. perfluorinated.

In one embodiment, the substrate comprises polytetrafluoroethylene (PTFE), a modified PTFE, a fluorothermoplastic or a fluoroelastomer or any combination of these materials. The term "modified PTFE" as used herein is intended to denote a type of tetrafluoroethylene copolymer in which further perfluorinated, fluorinated or non-fluorinated co-monomer units are present.

The substrate furthermore may be a porous substrate, for example porous PTFE.

The term "porous" as used herein refers to a material which has voids throughout the internal structure which form an interconnected continuous air path from one surface to the other.

The substrate may be a microporous substrate. This means that the voids of the substrate are very small and are usually referred to as "microscopic".

A suitable pore size of the voids in the microporous substrate is in the range of 0.01 to 15 micrometer as determined in the mean flow pore size measurement.

In one embodiment, the substrate comprises, or consists, of expanded PTFE (ePTFE, EPTFE).

PTFE may be expanded (i.e., drawn) in one or more directions to render the fluoropolymer porous. The porous fluoropolymer can be in the form of a tape, tube, fiber, sheet or membrane. The microstructure of the porous fluoropolymer can include nodes and fibrils, only fibrils, only fibril strands or bundles, or stretched nodes interconnected by fibrils.

Suitable fluoropolymer membranes include uni- or biaxially stretched polytetrafluoroethylene membranes.

A suitable expanded polytetrafluoroethylene (ePTFE) material is, e.g., the nonwoven ePTFE films disclosed by Bowman in U.S. 4,598,011, by Branca in WO 96/07529, by Bacino in U.S. Pat. No. 5,476,589, by Gore in US 4,194,041 and by Gore in U.S. 3,953,566. The ePTFE films described therein are thin, strong, chemically inert and intrinsically can have a high flow-through rate for air or liquids.

Suitable fluoropolymers for making ePTFE films include PTFE and copolymers of tetrafluoroethylene like FEP, PFA, and THV.

The combination of mean flow pore size and thickness determines flow rates through the membranes. For microfiltration application, acceptable flow is required with good particle retention performance. A narrow small ePTFE pore size comes with high water entry pressures. A more open ePTFE pore size would decrease the resistance of an ePTFE membrane against water entry. For these practical reasons, a mean flow pore size of ePTFE below 0.3 µm is considered to be good.

The term "ionic fluoropolymer" is intended to denote an organic polymer having ionic groups, i.e. groups bearing an electric charge, which may be anionic or cationic groups, such as -S₃⁻, -COO⁻, -PO₄²⁻, or -NH₃⁺. Furthermore, in the ionic fluoropolymer, fluorine atoms are present which are covalently bonded to carbon atoms in the polymer main or side chains (branches).

Precursors of ionic fluoropolymers are such compounds which can be transferred into ionic fluoropolymers by simple chemical reactions. For example, the precursor for an ionic fluoropolymer containing -SO₃⁻ groups as ionic groups may be the same compound with non-ionic -SO₃H groups, which may then be converted into the corresponding anionic -SO₃⁻ groups by reaction of the precursor with the counter-ionic agent or its precursor.

The term "organic polymer" includes homopolymers, copolymers, such as for example, block, graft, random and alternating copolymers as well as terpolymers, further including their derivatives, combinations and blends thereof. Furthermore, unless specifically limited, the term "polymer" shall include all geometrical configurations of the molecule including linear, block, graft, random, alternating, branched structures, and combination thereof as regards both embodiments.

In one embodiment, the ionic fluoropolymer has a high fluorine content, e.g. > 50 atom% with respect to the non-carbon atoms, in order to improve the compatibility to the substrate, especially to fluorinated substrates such as PTFE.

In one embodiment, the fluorine/hydrogen ratio, in the following F/H ratio, of the ionic fluoropolymer is above 1, in a further embodiment it is above 2, and in still a further embodiment it is above 3, as the compatibility with substrates, in particular fluorinated polymers, is further improved and the solubility in water is kept on a low level. Additionally, the durability of the coating is enhanced.

The F/H ratio determines the degree of swelling at moderate or high relative humidity. The higher the F/H ratio the lower the degree of swelling under humid conditions.

In one embodiment, the ionic fluoropolymers are perfluorinated, in particular in the case of using them with fluorinated substrates such as PTFE or ePTFE substrates.

The equivalent weight of an ionic fluoropolymer is defined to be the molecular weight of the ionic fluoropolymer divided by the number of ionic groups present in the ionic fluoropolymer.

The equivalent weight of the ionic fluoropolymer in one embodiment ranges from 400 to 15 000 g/mol, in a further embodiment it ranges from 500 to 10 000 g/mol, and in still a further embodiment it ranges from 700 to 8 000 g/mol.

If the equivalent weight is too low, the solubility in water will be too high. If the equivalent weight is too high the antimicrobial properties will be deteriorated.

In one embodiment, the ionic fluoropolymer is not water-soluble.

The ionic groups of the ionic fluoropolymer may be anionic groups or cationic groups.

In one embodiment, the ionic groups are anionic groups, and in a further embodiment, the groups are selected from carboxylic, phosphoric, sulphonic groups and mixtures thereof.

In one embodiment of the invention the ionic fluoropolymer is either a fluoroionomer or an ionic fluoropolyether.

The term "fluoroionomer" is intended to denote a copolymer of partially or perfluorinated alpha olefins such as H₂C=CHF (vinyl fluoride), H₂C=CF₂ VDF (vinylidene fluoride), HFC=CHF, F₂C=CF₂ (tetrafluoroethylene), F₂C=CFCF₃, CIFC=CF₂ chlorotrifluoroethylene, with partially or perfluorinated vinyl ethers. The copolymer furthermore contains ionic groups. The fluoroionomer may also include non-fluorinated comonomers such as acetylene.

The fluoroionomer may comprise side chains which may be linked to the polymer by an ether group. The side chain length can vary from 3 carbon atoms to 8 carbon atoms including ether links. Then, the ionic groups may be bonded to the side chains.

Commercial ionomers are available from DuPont (DuPont™ Nafion^{®}), Asahi Glass Co. Ltd. (Flemion^{®}), 3M-Dyneon (US patent publication no. 2004/0121210 A1), Asahi Kasei (Aciplex^{®}), Dow Chemical (Dow 808 EW ionomer), Solvay Solexis (Hyflon^{®}Ion), and Shanghai GORE 3F (US 7,094,851).

The term "ionic fluoropolyether" is intended to denote a polymer made from partially or perfluorinated olefinic monomer units linked by O atoms and units containing ionic groups, i.e. groups bearing an electric charge. In the ionic fluoropolyether molecules, one or more ionic groups of the same or a different nature may be present.

Ionic fluoropolyethers typically are thermally stable, substantially insoluble in water and most common solvents, and cannot be leached out after a coating application.

For example, the fluoropolyether olefinic monomer units may comprise -O-(CF₂-CF₂)-, and/or -O-(CFH-CF₂)-, and/or -O-(CH₂-CF₂)-, and/or -O-(CH₂-CHF)-, and/or -O-(CF(CH₃)-CF₂)-, and/or -O-(C(CH₃)₂CF₂)-, and/or -O-(CH₂-CH(CH₃))-, and/or -O-(CF(CF₃)-CF₂)-, and/or -O-(C(CF₃)₂CF₂)-, and/or -O-(CF₂ CH(CF₃)) -.

The ionic groups may be anionic groups, such as -SO₃-, -CoO, -OPO₃²⁻, and/or combinations of anionic and cationic groups, such as -SO₃⁻, -COO⁻, -OPO₃²⁻, with -NH₃⁺,-NR₁H₂+ or -NR₂H⁺.

In one embodiment, the ionic groups are anionic groups, and in a further embodiment the groups are selected from carboxylic, phosphoric, sulphonic groups and mixtures thereof.

Precursors of ionic fluoropolyethers are such compounds which can be transferred into fluoropolyethers having ionic groups by simple chemical reactions. For example, the precursor for an ionic fluoropolyether containing -COO⁻ groups as ionic groups may be the same compound with non-ionic -COOH groups, which may then be converted into the corresponding anionic -COO⁻ groups by reaction of the precursor with the counter-ionic agent or its precursor, e.g. by reaction with an acetate salt such as copper acetate and heating so as to evaporate acetic acid.

In the ionic fluoropolyether, fluorine atoms are present which are covalently bonded to carbon atoms in the polymer main or side chains (branches). The term "polymer" includes copolymers, such as for example, block, graft, random and alternating copolymers as well as terpolymers, further including their derivatives, combinations and blends thereof. Furthermore, unless specifically limited, the term "polymer" shall include all geometrical configurations of the molecule including linear, block, graft, random, alternating, branched structures, and combination thereof.

Ionic perfluorinated polyethers usually have olefinic monomer units selected from any one of or combination of the following: -CF₂-O-; -(CF₂CF₂)-O-; -(CF(CF₃))-O-; -(CF₂CF₂CF₂)-O-; -(CF₂CF(CF₃))-O-; and - (CF(CF₃)CF₂)-O-. Some newer types of perfluorinated polyethers may also contain other repeating units (e. g. (C(CF₃)₂)-O-) or such with more than three carbon atoms: e. g. -(C₄F₈)-O-; or -(C₆F₁₂)-O-.

In one embodiment, the ionic fluoropolyether is selected from the group of ionic perfluoropolyalkylethers, i.e. perfluoropolyalkylethers having one or more ionic groups in the molecule. Perfluoropolyalkylether are usually abbreviated as "PFPE". Other synonymous terms frequently used include, "PFPE oil", "PFPE fluid" and "PFPAE".

In the art, PFPEs are known which have only neutral, non-ionic groups, especially non-ionic end groups.

A general description of such perfluorinated polyethers is found in the book "Modern Fluoropolymers", edited by John Scheirs, Wiley Series in Polymer Science, John Wiley & Sons (Chichester, New York, Wienheim, Brisbane, Singapore, Toronto), 1997, Chapter 24: Perfluoropolyethers (Synthesis, Characterization and Applications).

However, ionic fluoropolyethers, including ionic PFPEs as used in the present invention, differ from such neutral PFPE in that they comprise ionic groups.

The ionic fluoropolyether molecule usually comprises two end groups at opposite ends of the backbone of the ionic fluoropolyether structure.

Typically, the ionic groups present in the ionic fluoropolyether molecule constitute, or are attached to, those end groups.

The ionic fluoropolyether may thus have been obtained by modifiying non-ionic fluoropolyether by end group reactions. Such compounds are commercially available, for example, the compounds sold under the trade name Fluorolink^{®} (Solvay Solexis).

Embodiments of ionic fluoropolyethers, or precursors thereof, are:
(a) a perfluoropolyether (PFPE), said PFPE comprising end groups selected from the following:

   -(O)ₙ-(CR₁R₂)ₘ-X

   wherein:
   R₁ = H, F, Cl, Br or I;
   R₂ = H, F, Cl, Br or I;
   X = COOH, SO₂OH or OPO(OH)₂,
   n=0 or 1; and
   m=0-10.

However, there may also be groups next to the end groups such as those containing
-CFH-,
-(CH₂)ₙ-with n=1 to 10,
-(OCH₂)ₙ-with n=1 to 10 or
-(OCH₂CH₂)ₙ-with n=1 to 10.

If the ionic fluoropolyether comprises non-ionic end groups, typically these are groups such as, -OCF₃, -OC₂F₅, and -OC₃F₇.

However, the non-ionic end groups may also be selected from the following:

-(O)ₙ-(CR₁R₂)ₘ-CR₃R₄R₅

wherein:
R₁ = H, F, Cl, Br or I;
R₂ = H, F, Cl, Br or I;
R₃ = H, F, Cl, Br or I;
R₄ = H, F, Cl, Br or I;
R₅ = H, F, Cl, Br, I, alkyl or aryl;
n =0 or 1; and
m=0-10.

Furthermore, there may also be non-perfluorinated end groups such as those containing H, Cl, Br or I radicals.

Examples of non-perfluorinated end groups comprise structures such as:

-CF₂R₆ R₆= H, Cl, Br, or I;

or

-CFR₇-CF₃ R₇ = H, Cl, Br or I.

The end groups according to the formula of -(O)ₙ-(CR₁R₂)ₘ-CA₃R₄A₅ may also be selected from any combination of the following:
-OCF₃; -OC₂F₅; -OC₃F₇; -OC₄F₉; -OC₅F₁₁; -OC₆F₁₃; -OC₇F₁₅; -OC₈F₁₇; -OC₉F₁₉; -OC₁₀F₂₁;
-OCF₂H; -OC₂F₄H; -OC₃F₆H; -OC₄F₈H; -OC₅F₁₀H; -OC₆F₁₂H; -OC₇F₁₄H; - OC₈F₁₆H; -OC₉F₁₈H; -OC₁₀F₂₀H;
-OCF₂Cl; -OC₂F₄Cl; -OC₃F₆Cl; -OC₄F₈Cl; -OC₅F₁₀Cl; -OC₆F₁₂Cl; -OC₇F₁₄Cl; -OC₈F₁₆Cl; -OC₉F₁₈Cl; -OC₁₀F₂₀Cl;
-OCF₂Br; -OC₂F₄Br; -OC₃F₆Br; -OC₄F₈Br; -OC₅F₁₀Br; -OC₆F₁₂Br; - OC₇F₁₄Br; -OC₈F₁₆Br; -OC₉F₁₈Br; -OC₁₀F₂₀Br;
-OCF₂I; -OC₂F₄I; -OC₃F₆I; -OC₄F₈I; -OC₅F₁₀I; -OC₆F₁₂I; -OC₇F₁₄I; -OC₈F₁₆I; -OC₉F₁₈I; -OC₁₀F₂₀I;
-OCF₁H₂; -OC₂F₃H₂; -OC₃F₅H₂; -OC₄F₇H₂; -OC₅F₉H₂; -OC₆F₁₁H₂;-OC₇F₁₃H₂; -OC₈F₁₅H₂; -OC₉F₁₇H₂; -OC₁₀F₁₉H₂;
-OCFCl₂; -OC₂F₃Cl₂; -OC₃F₅Cl₂; -OC₄F₇Cl₂; -OC₅F₉Cl₂; -OC₆F₁₁Cl₂; - OC₇F₁₃Cl₂; -OC₈F₁₅Cl₂; -OC₉F₁₇Cl₂; -OC₁₀F₁₉Cl₂;
-OCF₁Br₂; -OC₂F₃Br₂; -OC₃F₅Br₂; -OC₄F₇Br₂; -OC₅F₉Br₂; -OC₆F₁₁Br₂; - OC₇F₁₃Br₂; -OC₈F₁₅Br₂; -OC₉F₁₇Br₂; -OC₁₀F₁₉Br₂;
-OCF₁I₂; -OC₂F₃I₂; -OC₃F₅I₂; -OC₄F₇I₂; -OC₅F₉I₂; -OC₆F₁₁I₂; -OC₇F₁₃I₂; - OC₈F₁₅I₂; -OC₉F₁₇I₂; -OC₁₀F₁₉I₂;
-CF₃; -C₂F₅; -C₃F₇; -C₄F₉; -C₅F₁₁; -C₆F₁₃; -C₇F₁₅; -C₈F₁₇; -C₉F₁₉; -C₁₀F₂₁;
-CF₂H; -C₂F₄H; -C₃F₆H; -C₄F₈H; -C₅F₁₀H; -C₆F₁₂H; -C₇F₁₄H; -C₈F₁₆H; - C₉F₁₈H; -C₁₀F₂₀H;
-CF₂Cl; -C₂F₄Cl; -C₃F₆Cl; -C₄F₈Cl; -C₅F₁₀Cl; -C₆F₁₂Cl; -C₇F₁₄Cl; -C₈F₁₆Cl; - C₉,F₁₈Cl; -C₁₀F₂₀Cl;
-CF₂Br; -C₂F₄Br; -C₃F₆Br; -C₄F₈Br; -C₅F₁₀Br; -C₆F₁₂Br; -C₇F₁₄Br; -C₈F₁₆Br; - C₉F₁₈Br; C₁₀F₂₀Br;
-CF₂I; -C₂F₄I; -C₃F₆I; -C₄F₈I; -C₅F₁₀I; -CₐF₁₂I; -C₇F₁₄I; -C₈F₁₆I; -C₉F₁₈I; - C₁₀F₂₀I;
-CF₁H₂; -C₂F₃H₂; -C₃F₅H₂; -C₄F₇H₂; -C₅F₉H₂; -C₆F₁₁H₂; -C₇F₁₃H₂; -C₈F₁₅H₂; - C₉F₁₇H₂; -C₁₀F₁₉H₂;
-CFCl₂; -C₂F₃Cl₂; -C₃F₅Cl₂; -C₄F₇Cl₂; -C₅F₉Cl₂; -C₆F₁₁Cl₂; -C₇F₁₃Cl₂; - C₈F₁₅Cl₂; -C₉F₁₇Cl₂; -C₁₀F₁₉Cl₂;
-CF₁Br₂; -C₂F₃Br₂; -C₃F₅Br₂; -C₄F₇Br₂; -C₅F₉Br₂; -C₆F₁₁Br₂; -C₇F₁₃Br₂; - C₈F₁₅Br₂; -C₉F₁₇Br₂; -C₁₀F₁₉Br₂; and
-CF₁I₂; -C₂F₃I₂; -C₃F₅I₂; -C₄F₇I₂; -C₅F₉I₂; -C₆F₁₁I₂; -C₇F₁₃I₂; -C₈F₁₅I₂; -C₉F₁₇I₂; -C₁₀F₁₉I₂.

Commercially available ionic fluoropolyethers suitable for the present invention are, for example, known also under the trade names Fomblin^{®}, (Solvay Solexis), Fluorolink^{®} (Solvay Solexis), Krytox^{®} (DuPont) and Demnum^{®} (Daikin Kogyo Co. Ltd.). These compounds are available in a substantially pure form, and are also sometimes supplied as a microemulsion in water, such as Fomblin^{®} FE 20C or Fomblin^{®} FE 20 EG.

Suitable ionic fluoropolyether structures which are commercially available are as follows:
Fluorolink^{®} C and Fluorolink^{®} C 10:
   HOOC-CF₂-(OCF₂CF₂)ₙ-(OCF₂)ₘ,-O-CF₂-COOH where m+n = 8 to 45 and m/n = 20 to 1 000
Fluorolink^{®} F 10:
   PO(OH)_{3-y}(EtO)ₓ]_{y}- CH₂-CF₂-(OCF₂CF₂)ₙ-(OCF₂)ₘ-O-CF₂-CH₂(EtO)ₓ]_{y} PO(OH)_{3-y}
   where m+n = 8 to 45 and m/n = 20 to 1 000
Krytox^{®} 157 FSL
   F-[CF(CF₃)CF_{2O}]ₙ-CF(CF₃)-COOH where n∼14 (Mₙ = 2 500),
   including Krytox^{®} 157 FSM (Mₙ = 3 500-4 000) and Krytox^{®} 157 FSH (Mₙ= 7 000-7 500)
Demnum^{®} SH
   CF₃-CF₂-CF₂-O-(CF₂-CF₂-CF₂O)ₘ-CF₂-CF₂COOH (molecular weight 3 500).

The component comprising an ionic fluoropolyether or a precursor thereof may be a viscous liquid at 60 °C with viscosities ranging from about 5 mPas to about 1 000 000 mPas, about 10 mPas to about 500 000 mPas or preferably about 30 mPas to about 50 000 mPas.

The ionic fluoropolymers may be insoluble in water.

Usually, the ionic fluoropolymers are oligomers and/or colloids which may be insoluble in water. Typically, the particle size of those oligomers and/or colloids dispersed in water is between 1 and 200 nm measured using laser light scattering (US 7,094,851).

The term "counter-ionic agent" is intended to denote any compound bearing an ionic charge opposite to the charge of the ionic groups of the ionic fluoropolymer. In the present invention, the counter-ionic agent comprises ions having antimicrobial activity which are selected from ions of Ag, Zu, Cu, Au, Pt, Pd, Ir, Su and Bi and combinations of these ions or a precursor thereof with quaternized ammonium compounds and/or cationic polyelectrolytes.

The counter-ionic agent and the ionic fluoropolymer upon their mixture form a complex in which the electronic charge present on the ionic groups of the fluoropolymer is at least in part balanced by the electronic charge present on the counter-ionic agent, as explained in detail below. Such complexes, i.e. ionic fluoropolymer charge balanced with the counter-ionic agent, will generally be in the form that a network of ionic fluoropolymer molecules and counter-ionic agent species is formed extending over the entire coating so that the coating can be regarded as "cross-linked".

As mentioned, the term "antimicrobial activity" as used herein is intended to denote any activity in killing microorganisms such as bacteria, fungues, and viruses.

For example, ions having antimicrobial activity comprise Ag, Au, Pt, Pd, Ir and Cu, Sn, Bi and Zn ions, and charged organic species, a zwitterionic compound or a polycation such as organic cationic species, like cationic polyelectrolytes, N-alkylated quaternary ammonium cations and derivatives, polymers from N-alkylated 4-vinyl pyridine, quaternized ethyleneimine, quaternized acrylic acid derivatives and their copolymers.

Suitable monomers for charged organic species, a zwitterionic compound or a polycation comprise cationic monomers like quaternary ammonium salts of substituted acrylamide, methacrylamide, acrylate, methacrylate, 2-vinyl pyridine, 4-vinyl pyridine, 2-vinyl piperidine, 4-vinyl piperidine, vinylamine, diallylamine.

Preferred polycations are poly(4-vinylpyridine) including alkylated poly(4-vinylpyridine), polyethyleneimine (PEI) and alkyl substituted PEI, poly(diallyldimethylammonium)salts (PDADMA), poly(allylamine hydrochloride), polyvinylamine and copolymers and mixtures thereof.

In another aspect, the polycations may comprise at least one quaternary amine ion.

Use of polycations as counter-ionic agents is suitable for enhancing the antimicrobial properties of the coating, particularly on membranes, paper and textiles and in the field of permeability adjustment as well as for surface modification to bind active species.

In one embodiment, the ions having antimicrobial activity comprise Ag, Au, Pt, Pd, Ir and Cu, Sn, Bi and/or Zn ions, in a further embodiment the ions having antimicrobial activity comprise Ag, Cu and/or Zn ions, and in still a further embodiment the ions having antimicrobial activity comprise Ag ions.

In the embodiment where the ions having antimicrobial activity comprise Ag ions (Ag⁺), the coatings can be made by incorporation of silver acetate, silver carbonate, silver nitrate, silver lactate, silver citrate and oxides as well as mixtures and derivatives thereof, as precursors of Ag⁺ in the mixture for preparing the coating.

It is also possible and may be advantageous for specific effectiveness to use combination of the above mentioned ions having antimicrobial activity, such as combinations of silver and copper, silver and zinc, silver and cationic polyelectrolytes.

In the embodiments where the ions having antimicrobial activity comprise Ag, Au, Pt, Pd, Ir and Cu, Sn, Bi and/or Zn ions, the ions having antimicrobial activity optionally may further comprise charged organic species, a zwitterionic compound or a polycation such as organic cationic species, like cationic polyelectrolytes, N-alkylated quaternary ammonium cations and derivatives, polymers from N-alkylated 4-vinyl pyridine, quaternized ethyleneimine, quaternized acrylic acid derivatives and their copolymers.

In a further embodiment, the counter-ionic agent further includes surface charged nanoparticles, such as nanoparticles of intrinsically conductive polymers (ICP).

The multiple charges present in the surface charged nanoparticles form a complex with multiple points of interactions with the ionic fluoropolymer, resulting in a stable coating.

Examples of such nanoparticles include nanoparticles of colloidal organic salts, organic colloidal polymers, polystyrenesulfonate, dyes and inks, and intrinsically conducting polymers.

Non-charged nanoparticles may be provided with surface charges by coating with polyelectrolytes such as cationic polyelectrolytes, for example polyethylenimine (PEI).

If nanoparticles contain surface functional groups, for example, by treating them with organic compounds like carboxylic acids, sulfates, phosphates, silanes, diols and polyols, a cationic polyelectrolyte can e.g. be used to bridge the nanoparticles with an anionically charged fluoropolymer.

The surface charged nanoparticles typically are non-water soluble organic molecules in form of single molecules, colloids, oligomers and/or polymers.

The size of these surface charged nanoparticles dispersed in a liquid in one embodiment is between 5 and 500 nm, in a further embodiment is between 10 and 200 nm, and in still a further embodiment is between 20 to 100 nm.

The particles size of surface charged nanoparticles dispersed in a liquid, such as water, may be measured by laser Doppler technique. For example, Ormecon™, a polyaniline dispersion, is available in form of 10 to 50 nm particles measured by laser Doppler technique.

The surface charged nanoparticles in one embodiment include an intrinsically conductive polymer.

The term "intrinsically conductive polymer" (ICP) is intended to denote organic polymers containing polyconjugated bond systems such as double and triple bonds and aromatic rings which have been doped with electron donor or electron acceptor dopants to form a charge transfer complex having an electrical conductivity of at least about 10⁻⁶ S/cm by the four-in-line probe method.

Dopants act as charge balancing counterions to the ICP, as well as keeping the ICP dispersed in water.

These dopants are mostly anionic water soluble materials like single ions, anionic surfactants, anionic polyelectrolytes including polyacrylic acid, polystyrene sulfonic acid and derivatives, or combination thereof. Examples of ICPs are ICPs made from polymers like polyaniline and substituted polyanilines, polypyrrole and substituted polypyrroles, polyacetylene and substituted polyacetylenes, polythiophene and substituted polythiophenes, polyphenylene such as polyparaphenylene and substituted poly(para)phenylens, polyazine and substituted polyazines, poly-p-phenylene sulfide and substituted poly-p-phenylene sulfides, as well as mixtures and/or copolymers thereof.

Typical commercially available intrinsically conductive polymers are poly(3,4-ethylenedioxythiophene) PEDOT supplied by H.C. Starck, GmbH and called Clevios™ P or PH now (former Baytron^{®}, Baytron^{®}-P or -PH). Exemplarily there may also be mentioned substituted polythiophenes like polythienothiophene, polyaniline (Covion Organic Semiconductors GmbH - Frankfurt and Ormecon™ - Ammersbek), polypyrrole (Sigma-Aldrich, St. Louis, MO), polyacetylenes, and combination thereof. Polyacetylene, poly(N-substituted pyrrole), poly(N-substituted aniline), poly(para-phenylene), poly(phenylenesulfide) including their doping systems also can be used as the intrinsically conductive polymer.

The use of intrinsically conductive polymers in the counter-ionic agent allows the production of coatings having an excellent balance of antistatic properties, fire retardance and at the same time breathability.

Moreover, the use of intrinsically conductive polymers yields highly antistatic coatings having excellent adhesion properties. Additionally, intrinsically conductive polymers can be used for oleophobic coatings.

Intrinsically conductive polymers are available as small nanoparticles stabilized in water based dispersions or organic formulations.

In one embodiment, aqueous dispersions of [poly(3,4-ethylenedioxy-thiophene) poly(styrene sulfonate)] intrinsically conductive polymers in form of nanoparticles such as in Clevios™ P or PH (former Baytron^{®} P or PH) are used.

The size of the dispersed nanoparticles, which are hence in a swollen state, in one embodiment is between 5 and 500 nm, in a further embodiment is between 10 and 200 nm, and in still a further embodiment is between 20 to 100 nm.

The particles size of dispersed nanoparticles of intrinsically conductive polymers may be measured by laser Doppler technique. For example, Ormecon™, a polyaniline dispersion, is available in form of 10 to 50 nm particles measured by laser Doppler technique.

Furthermore, the mean size of the dispersed nanoparticles in one embodiment is between 5 and 500 nm, in a further embodiment is between 10 and 200 nm, and in still a further embodiment is between 20 to 100 nm.

The mean swollen particle size of dispersed nanoparticles of intrinsically conductive polymers may be measured by ultracentrifugation. For example, Clevios™ P (former Baytron^{®} P) grades have been measured by ultracentrifugation and the results are reported in S. Kirchmeyer, K. Reuter in J. Mater. Chem., 2005, 15, 2077-2088.

In the final coating, the ionic fluoropolymer and the counter-ionic agent will be present in the form of a complex.

In one embodiment, the amount of counter-ionic agent or its precursor is selected so that the amount of counter-ionic agent is from 0.05 to 1.0 charge equivalents, in a further embodiment is from 0.1 to 0.99 charge equivalents, in still a further embodiment is from 0.15 to 0.95 charge equivalents, in still a further embodiment is from 0.2 to 0.90, and in still a further embodiment is from more than 0.5 to 0.90 charge equivalents of the amount of ionic groups present in the ionic fluoropolyether in the final coating.

This means that in those embodiments 5 to 100 %, 10 to 99 %, 15 to 95 %, 20 to 90 % and more than 50 to 90 %, respectively, of the ionic charges of the ionic fluoropolymer in the final coating are balanced by the ionic charges of the intrinsically conductive polymer, and hence in those embodiments 5 to 100 %, 10 to 99 %, 15 to 95 %, 20 to 90%, and more than 50 to 90 %, respectively, of the ionic fluoropolyether in the final coating are cross-linked by the intrinsically conductive polymer, and thus present in the form of a complex.

If the amount of counter-ionic agent is too low, the functionality, such as antimicrobial activity, of the coating will be comparatively low. On the other hand, if the amount of counter-ionic agent is too high, the counter-ionic agent will be embedded by the polymer chains of the ionic fluoropolymer without contributing to complexing, leading e.g. to leachability of the coating.

The amount of counter-ionic agent selected to provide a charge balance in the range of 5 to 100 %, in the range of 10 to 99%, in the range of 15 to 95 %, in the range of 20 to 90 %, and in in the range of from more than 50 to 90 %, respectively, allows for the production of coatings having an unique balance of properties including antimicrobial properties.

The coating in the article of the present invention may be an "outer coating", i.e. a coating which is present as a substantially continuous layer ("monolithic coating"), or a discontinous e.g. dot-like pattern on an outer surface of the substrate, and/or an "inner coating", i.e. a coating present on the inner and outer surface of the pores of a porous substrate, but not occluding them.

The coating may also completely fill the pores of the porous substrate, i.e. the coating may be fully imbibed in the substrate, thus occluding the pores.

An outer, e.g. monolithic coating may be present on one side or on both sides of a substrate.

A monolithic coating may also form
a) an intermediate layer between two substrates, e.g. two microporous membranes or one microporous membrane and one textile layer, or
b) part of a multicoated layer on a substrate, e.g. one layer between two other coatings or the topcoating at the most outer surface.

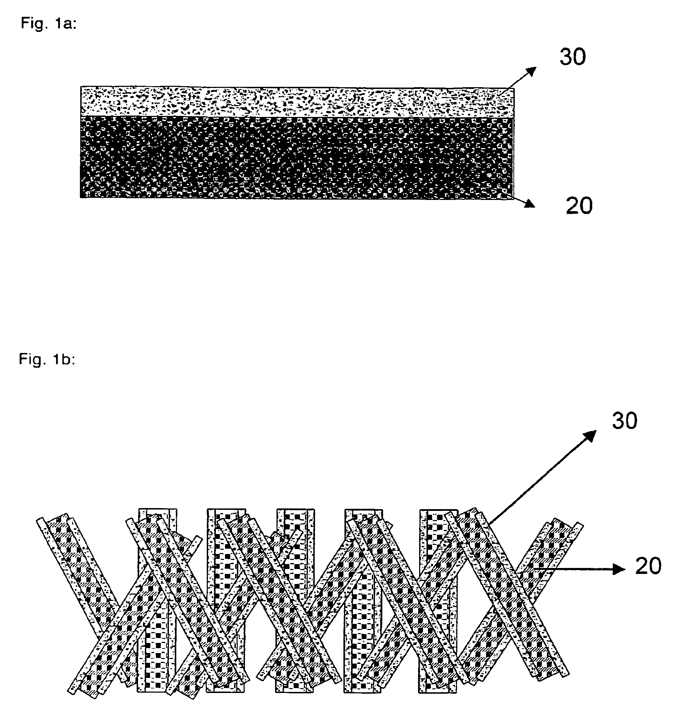

Figure 1 a shows a schematic drawing of a monolithic coating 30 in the form of a layer on an outer surface a substrate 20.

As a monolithic coating is usually airtight, in case of a porous substrate, air flow through the coated article will be prevented by a monolithic coating. By "airtight layer" and by "prevention of airflow" is meant that no airflow is observed for at least two minues as determined by the Gurley test described in the experimental part.

The thickness of the final coating for monolithic coatings in one embodiment is in the range of 0.05 to 25 micrometer. Within this range a skilled person will be able to find the most suitable thickness depending on the intended use.

For achieving an extraordinary balance of properties for the coated substrate, such as MVTR and antistatic properties, MVTR and oleophobicity, MVTR and flame retardency, the thickness of the coating for monolithic coatings may be in the range of 0.075 to 25 micrometer.

If the layer is thinner than 0.05 micrometer the durability of the coating will be low.

In one embodiment, the laydown of the final coating on the substrate is from 0.1 to 10 g/m² based on the outer surface of the substrate.

For example, the lowest laydown for a monolithic coating on ePTFE starts usually at 0.3 g/m² on a membrane.

Laydown and coating thickness will effect durability and breathability (MVTR) and should be adjusted depending on the intended use.

Breathability or moisture vapour transport rate of monolithic coated porous substrates, such as ePTFE films, is characterized by the MVTR value. Typically, the MVTR of a substrate, in particular an ePTFE substrate, with a monolithic coating on the porous membrane will be above 25 000 g/m² 24 h. In one embodiment, the MVTR is adjusted to be above 40 000 g/m² 24 h, and in a further embodiment, the MVTR is above 60 000 g/m² 24h.

The MVTR of the coated article of the invention remains high at low relative humidity.

A schematic drawing of an inner coating present on the inner and outer surface of the pores 20 on a porous substrate 30 is shown in Figure 1 b.

Such an inner coating is in the form of an air permeable coating, i.e. the coating is present on the inner and outer surface of the pores of the substrate without, however, occluding the pores.

The inner coating results in an air permeable porous substrate after coating, provided, of course, that no additional monolithic coating is applied to the substrate which prevents air flow. By air permeability is meant the observation of a certain volume of air through a defined area of material as determined by the Gurley test described below. Inner coatings allow the construction of air permeable scaffolds with functionalized surfaces, particularly on microporous substrates such as thin membranes, for example.

The thickness of an inner coating in one embodiment is above 0.05 micrometer.

Inner coatings may be applied to ultra thin substrates below a thickness of 500 nanometer and may also be applied to ultra thin substrates below a thickness of 250 nanometer.

Inner coatings may furthermore be applied for the coating of microporous membranes, such as ePTFE. For an inner coating, the mean flow pore size of ePTFE may be between 0.05 micrometer and 15 micrometer, in a further embodiment may be between 0.1 micrometer and 10 micrometer.

In another embodiment, the coating is formed on a porous substrate such that all pores are completely filled, i.e. fully imbibed, with the coating material, and hence the pores are occluded.

Fully imbibed coatings are mainly applied in ultra thin substrates. Thus, a fully imbibed coating may be applied to a substrate with a thickness of 25 micrometer or below, or may be applied to a substrate with a thickness of 15 micrometer or below. Thicker constructions can be made by layering these fully imbibed articles.

Of course, one or more outer coatings, on the one hand, and inner coatings or fully imbibed coatings, on the other hand, may be applied a) simultaneously and/or b) step by step to a substrate. For example, a porous substrate may have a monolithic coating on at least one outer surfaces and an inner coating within the pores.

The coating according to the invention specifically allows the production of articles being characterized by excellent adhesion strength of the coating to the substrate and/or to an additional layer like a textile to the coated substrate, preferably above 300 N/645 mm² and more preferably above 500 N/645 mm² when tested in the Z-test.

The hydrophilicity and the hydrophobicity properties of a coated polymeric substrate can easily be set by selection of the counter-ionic agent and by selection of the ionic fluoropolymer.

The present invention allows the production of antimicrobial articles having in addition oleophobicity. Oleophobicity represents contamination resistance of a coated substrate against oily and liquid substances. Such articles are usually characterized by oil ratings of higher than or equal to 2, or even higher than 4, i.e. the coatings at the surface of the article preferably repel any liquid with a surface tension higher than 30 mN/m (oil rating 2), or even higher than 25 mN/m (oil rating 4).

The invention allows the production of antimicrobial articles which in one embodiment yield a surface resistance of below 10¹¹ Ohm/square, in a further embodiment yield a surface resistance of below 10⁹ Ohm/square, and in still a further embodiment yield a surface resistance of below 10⁸ Ohm/square, e.g. between 10⁴ to 10⁸ Ohm/square. These articles have an additional antistatic property.

It is furthermore possible to provide an antistatic article according to the invention, whereby the surface of the coated article has a charge decay time at 20 percent relative humidity of less than 5 seconds as measured according to DIN EN 1149-3. Such low charge decay times can be accomplished by the use of intrinsically conductive polymers and/or silver.

It is possible to produce the article according to the invention having a coating comprising a complex of an ionic fluoropolymer and a counter-ionic agent by coating a precursor of the ionic fluoropolymer on the substrate in a first step. In a second step an ion exchange reaction may be effected after coating.

However, in one embodiment a process for the production of a coating on a substrate is used comprising the steps of a) preparing a mixture of an ionic fluoropolymer or a precursor thereof and a counter-ionic agent or a precursor thereof; and b) applying the mixture prepared in step a) onto a substrate.

In this process, in a first step (step a)) a mixture of an ionic fluoropolymer or a precursor thereof and a counter-ionic agent or a precursor thereof in any of the embodiments described above is made. Mixing of the components is carried out until the mixture is homogeneous, i.e. all components are evenly distributed therein.

The reaction sequence of producing the mixture of the components in a first step and applying the mixture onto the substrate only in a second, subsequent step allows for a thorough mixing of the components and hence to an entirely homogeneous and even distribution of the two components in the mixture and, consequently, also in the final coating. This, in turn, is important in order to obtain the desired properties. Furthermore, by the pre-mixing step it is ensured that the coating has a good durability on the substrate and none of the components, in particular the counter-ionic agent, is easily leached out by contact with water.

The mixture in step a) may be in liquid form. This can either be so because the mixture of the components is liquid as such, or because one or all of the components have been dissolved, emulsified or dispersed in a solvent.

The mixture of the components as liquid in one embodiment has a viscosity greater than 50 mPas, in a further embodiment has a viscosity greater than 60 mPas, and in still a further embodiment has a viscosity greater than 70 mPas at 25 °C.

The coating mixture comprising the ionic fluoropolymer and the counter ionic agent may have a surface tension lower than about 35 mN/m, or may have a surface tension lower than 30 mN/m, or may even may have a surface tension lower than 20 mN/m.

Typically, the two component complex may have a surface tension lower than about 30 mN/m.

Such low surface tensions of the ionic fluoropolyether and counter ionic agent formulations are helpful for coating polymeric substrates, particularly fluoropolymers such as PTFE, which have very low surface energies. For most applications, no coating additives are required.

The ionic fluoropolymer or its precursor may be present in the mixture in a concentration of from more than 70 % by weight, or more than 80 % by weight, or even more than 85 % by weight if the second component, the counter-ionic agent, are ions up to an atomic mass of 150.

The ionic fluoropolymer or its precursor may be present in the mixture in a concentration of from more than 40 % by weight, or more than 50 % by weight, or even more than 55 % by weight if the second component, the counter-ionic agent, are ionic species up to a molecular weight of 800 g/mol.

Furthermore, the counter-ionic agent comprising a cation selected from Ag, Au, Pt, Pd, Ir and Cu, Sn, Bi and/or Zn ions, such as Ag⁺, Zn²⁺, Cu⁺, and/or Cu²⁺, or its precursor may be present in the mixture in a concentration of from 0.1 to 14.5 % by weight, or in a further embodiment between 0.5 to 10 % by weight.

As mentioned, precursors of the ionic fluoropolymer and counter-ionic agents are such compounds which can be transferred into ionic fluoropolymer and counter-ionic agents, respectively, by simple chemical reactions.

Usually, in step a) of the process, a mixture of precursors of the ionic fluoropolymer and/or counter-ionic agent will be prepared. This mixture may then be subjected to conditions under which a reaction of the precursor(s) to the final ionic fluoropolymer and the counter-ionic agent, e.g. Ag⁺, takes place before the application of the mixture onto the substrate.

The mixture may thus contain the ionic fluoropolymer and the counter-ionic agent and not only their precursors before coating the substrate in step b).

For example, a mixture can be prepared with one component being a precursor of an ionic fluoropolymer, such as an ionic fluoropolyether, having -COO⁻ groups. In this precursor, these groups bear H atoms which are covalently bonded to the -COO⁻ group so that this group is not in the form of bearing an electric charge. As the second component, a precursor of the counter ionic agent Ag⁺ may be used which might be silver acetate. Both components can be mixed in liquid form together at ambient temperature, but the precursors will not react under those condition.

In this example, the mixture may be heated to temperature where a reaction between the precursors takes place so that acetic acid evaporates from the mixture and the fluoropolymer complex having -COO⁻ groups and Ag⁺ ions is formed.

However, the mixture of the precursor(s) of the ionic fluoropolymer and/or the counter-ionic agent may also be applied to the substrate. For obtaining the final complex, the coated substrate must be subjected to conditions under which a reaction of the precursor(s) to the ionic fluoropolymer complex with a counter-ionic agent takes place.

When the ionic fluoropolymer and the counter-ionic agent are mixed, either upon their formation from the precursor(s) or when they are mixed as such, a complex of the ionic fluoropolymer and the counter-ionic agent is formed in which the ionic charges of the fluoropolymer are at least in part balanced by the ionic charges of the counter-ionic agent. It is believed that this leads to a rearrangement of the fluoropolymer molecules, or at least their ionic groups, and the counter-ionic agent species in the mixture. This rearrangement can form a network throughout the coating and hence a type of "cross-linking" of the ionic fluoropolymer with the counter-ionic agent species within the mixture.

This complex formation causes e.g. an increase in viscosity of the liquid mixture where the ionic fluoropolymer and the counter-ionic agent as such are mixed before the mixture is applied to the substrate.

In the final coating, in any case the ionic fluoropolymer and the counter-ionic agent will be present in the form of said complex.

Typically, the mixture containing the complex of the ionic fluoropolymer and the counter-ionic agent present on the substrate will be heated or dried, especially if the applied mixture comprising the complex of the ionic fluoropolymer and the counter-ionic agent still comprises a solvent. This drying step can be effected by known techniques in the art, such as reduction of pressure, heating and combinations thereof.

The coating after step b) may be heated to a temperature of 100 to 200 °C, in a further embodiment may be heated to 150 to 190 °C, and in still a further embodiment may be heated to 160 to 180 °C.

If the temperature is too low, the production time will be unacceptably long. If the temperature is too high, degradation of the coating formulation and/or the substrate, and a non-uniform coating might occur.

In the following, specific embodiments of the article of the invention are described. These embodiments are also part of the invention. If not mentioned otherwise, the above-described embodiments of the mixture, its components, and the coating apply also in these specific article embodiments.

In a first embodiment, the article comprises a substrate and a coating thereon, in particular a monolithic coating, comprising a complex of an ionic fluoropolymer and a counter-ionic agent comprising ions having antimicrobial activity, wherein the article has a MVTR value above 15 000 g/m²24h.

Breathability or moisture vapour transport rate of monolithic coated porous substrates, such as ePTFE films, is characterized by the MVTR value. In this embodiment, the breathability of the antimicrobial article will be enhanced.

In one embodiment, the MVTR is adjusted to be above 20,000 g/m² 24 h, and in a further embodiment, the MVTR is above 60,000 g/m² 24 h.

In a second embodiment, the article comprises a substrate and a coating thereon comprising a complex of an ionic fluoropolymer and a counter-ionic agent which comprises antimicrobial ions, in particular silver ions, wherein the article has a charge decay time at 20 percent relative humidity of less than 5 seconds as measured according to DIN EN 1149-3.

This embodiment allows the provision of an article with a unique balance of antimicrobial properties and antistatic performance. It is possible to provide an antistatic article according to the invention, whereby the surface of the coated article has a charge decay time at 20 percent relative humidity of less than 5 seconds as measured according to DIN EN 1149-3. In one embodiment, the counter-ionic agent further comprises surface charged nanoparticles, such as intrinsically conductive polymers.

In a third embodiment, the article comprises a substrate and a coating thereon comprising a complex of ionic fluoropolymer and a counter-ionic agent comprising ions having antimicrobial activity, wherein the article shows an oil rating equal or higher than 2 measured according to the AATCC test method 119-2000.

The coated article of this embodiment in addition to its antimicrobial property shows enhanced oleophobicity.

In a fourth embodiment, the article comprises a substrate and a coating thereon comprising a complex of an ionic fluoropolymer and a counter-ionic agent comprising ions having antimicrobial activity, wherein the article passes the zone of inhibition test for 24 hours after laundering cycles (5 home laundering cycles with detergents at 60°C).

In a fifth embodiment, the article comprises a substrate and a coating thereon comprising a complex of an ionic fluoropolymer and a counter-ionic agent comprising ions having antimicrobial activity, wherein the ionic fluoropolymer has an equivalent weight of 800 or below.

The coated article of this embodiment in addition to its antimicrobial property shows enhanced hydrophilicity.

In a sixth embodiment, the article comprises a substrate and a coating thereon comprising a complex of an ionic fluoropolymer and a counter-ionic agent comprising ions having antimicrobial activity, wherein the article has a water contact angle of 90 ° or higher.

The coated article of this embodiment in addition to its antimicrobial property shows enhanced hydrophobicity.

Water repellency of coated porous substrates, such as ePTFE films, is characterized by the contact angle. Water wicking into a coated porous substrate can be done by measuring the time that water needs to wick completely into a substrate. Typically, a water contact angle on a substrate higher than 90° represents hydrophobic surfaces.

In this embodiment, an ionic fluoropolymers with an equivalent weight of 2000 g/mol and higher may be used.

The present invention also relates to products which comprise an article in any of the above described embodiments and which in use is exposed to contamination with micro-organisms, i.e. microbes.

Those products include
- garments such as garments for protection, comfort and functionality including sporting goods and garments, gloves, hunting apparel, military fabrics, work wear for garbage workers,
- textile structures such as a shoe or shoe insert or textile covers in hospitals and guest rooms,
- laminates,
- filter elements such as for filtration or microfiltration of liquids and/or gases,
- venting elements such as for venting of vessels and containers,
- sensors,
- diagnostic devices,
- protective enclosures,
- separation elements,
- consumer healthcare articles, such as sterile packaging, clothing and footwear, personal hygiene products, and
- medical devices like catheters, implants, tubes, wound closures including suture yarn, and dressings.

The invention also relates to the use of an article any of the above described embodiments for the manufacture of such a product which in use is exposed to contamination with micro-organisms, i.e. microbes.

Still further, the invention relates to the use of a complex composition comprising an ionic fluoropolymer and a counter-ionic agent comprising, or consisting of, ions having antimicrobial activity for producing an antimicrobial coating on a substrate.

The present invention will be further illustrated through the examples described below, and by reference to the following figures:
- Figure 1a:: Schematic sectional view of an article (10) having a polymer porous substrate (20) and a monolithic coating (30) thereon.
- Figure 1b:: Schematic sectional view of an article (10) having a polymer porous substrate (20) and a coating (30) thereon, which is present on the inner surface of the pores.
- Figure 2:: SEM picture of the ePTFE membrane of Example 1 before coating (magnification 3500).
- Figure 3:: SEM picture of the coated ePTFE membrane of Example 1 (magnification 3500).
- Figure 4:: SEM picture of the ePTFE coated membrane of Example 1 after exposure to Pseudomonas Aeruginosa for 24 h (magnification 5000).
- Figure 5:: SEM picture of the coated ePTFE membrane of Example 1 after exposure to Staphyllcoccus Aureus for 24 h (magnification 5000).
- Figure 6:: SEM which shoes a closed monolithic surface of the sample of Example 10.

### Methods and Examples

### a) Oil repellency

Oil repellency was tested according to the AATCC test method 118-2000. The rating scale is 0 - 8, with "0" indicating the poorest degree of repellency. The lowest number that does not wet the substrate is the reported oil rating. High numbers indicate an excellent resistance to wetting oils.
0 is Nujol^{™}, mineral oil (wets)
1 is Nujol^{™} mineral oil (31.2 mN/m) (repels)
2 is 65/35 Nujol/n-hexadecane (by volume, 29.6 mN/m)
3 is n-hexadecane (27.3 mN/m)
4 is n-tetradecane (26.4 mN/m)
5 is n-dodecane (24.7 mN/m)
6 is n-decane (23.5 mN/m)
7 is n-octane (21.4 mN/m)
8 is n-heptane (19.8 mN/m)

### b) MVTR

Test of Water Vapor Permeability of Membrane and Laminate according to Hohenstein Standard Test Specification BPI 1.4.

Potassium acetate pulp is prepared by stirring potassium acetate at a ratio of 1 000 g potassium acetate to 300 g into distilled water and leaving to settle for at least 4 hours. 70 g ± 0.1 g of potassium acetate pulp is filled into a beaker. The beaker is covered with an ePTFE membrane and sealed.

A sample of 10 x 10 cm from the membrane/laminate to be tested is placed between beaker and a water bath at 23°C ± 0.2°C covered with an ePTFE membrane.

Each beaker's weight is recorded before (G1) and after (G2) the test.

| | |
|---|---|
| Testing time for ePTFE: | 5 minutes |
| Monolithic coated ePTFE: | 10 minutes |
| Textile laminate: | 15 minutes |
| Calculation of MVTR for ePTFE: | MVTR = ((G2-G1) x 433960)/5 |
| for monolithic coated ePTFE: | MVTR = ((G2-G1) x 433960)/10 |
| for laminate: | MVTR = ((G2-G1) x 433960)/15 |

### c) Gurley numbers

Gurley numbers [s] were determined using a Gurley Densometer according ASTM D 726-58.

The results are reported in terms of Gurley Number which is the time in seconds for 100 cubic centimeters of air to pass through 6.54 cm² of a test sample at a pressure drop of 1.215 kN/m² of water.

### d) Frazier numbers

Frazier numbers [cfm] were determined using an Air Permeability Tester III FX 3300 (TEXTEST AG) according ASTM D 737.

### e) Mean Flow Pore Size [MFP, µm]

MFP was measured using a PMI (Porous Materials Inc.) Capillary Flow Porometer CFP 1500 AEXLS. The membrane was completely wetted with Silwick (surface tension 20 mN/m). The fully wetted sample is placed in the sample chamber. The chamber is sealed, and gas is allowed to flow into the chamber behind the sample to a value of pressure sufficient to overcome the capillary action of the fluid in the pore of the largest diameter. This is the Bubble Point Pressure. The pressure is further increased in small increments, resulting in flow that is measured until the pores are empty of fluid. The applied pressure range was between 0 and 8.5 bar. Beside mean flow pore diameter, the largest and smallest detected pore diameter were detected.

### f) Charge decay time (CDT)

Charge decay time (CDT) was measured according DIN EN 1149-3.

### g) Surface resistivity

Surface resistivity was measured according ASTM D 257 between two parallel electrodes with a square configuration.

### h) Antibacterial properties

The bacteria used in this study were obtained from the American Type Culture Collection (Rockville, Maryland). The materials were tested against *Staphylococcus aureus* ATCC # 25923 and *Pseudomonas aeruginosa* ATCC # 27853. The organisms tested were cultured on blood agar media for 24 hours at 34-37 °C. The cultures were observed for colony morphology and purity by Gram Stain.

Material Preparation: Samples were cut on a clean bench into approximately 2.5-cm discs, and then were tested for the presence or absence of antimicrobial activity using the Zone of Inhibition Bioassay.

### Zone of Inhibition Method:

The bacterial cultures were grown up on Trypticase Soy blood agar and aseptically suspended into Mueller-Hinton broth. Cultures were standardized to a Mc Farland's 0.5 barium chloride standard as described in a standard method for disc diffusion sensitivity testing P: SC: 318. The standardized cultures were streaked onto Mueller-Hinton agar plates to form a uniform lawn of bacteria. The test material samples were placed aseptically with the desired test surface side down in contact with the agar (see material key for surface tested). The plates were incubated at 34-37 °C for 24 hours. Plates were then observed for the presence or absence of a clear zone of inhibition surrounding the sample, or no visible growth under or on the test material. Zones were measured in millimeters and results recorded.

### i) Biological activity tests

The tests are designed to determine the biological reactivity of mammalian cell cultures following contact with the elastomeric, plastics or other polymeric materials or extracts prepared from the materials. All tests use L929 mammalian (mouse) fibroplast cells. The AOL test (agarose overlay) and the MEM test (minimum essential medium) use a sheet of mammalian cells that is one cell thick (a monolayer) to determine whether a material is toxic or not. The MEM test is an extraction in which a specific amount of test material is extracted in a mostly saline liquid for 24 hours at 37 °C. After this time the liquid/extract is placed on the cells for three days. After three days a red dye is put on the cells to determine the amounts of living and dead cells; the living cells take up the dye and turn red and the dead cells don't. The Agarose Overlay test uses the same type of cells and monolayer, except for this test a layer of agar is poured on top of the cell layer and the agar is allowed to solidify. A piece of test material (about 1 cm²) is placed on the agar and any toxins in the material will diffuse through the agar layer and kill the cells. After one day the red dye is put on the agar and will dye the living cells red. The grading scale for the MEM test is 0 and 1 is nontoxic and 2, 3, and 4 are toxic. The grading scale for the AO test is 0, 1, and 2 are nontoxic and 3 and 4 are toxic. For both grading scales 0 is no toxic reaction and 4 is most toxic. The MEM test is considered to be more sensitive than the AO test.

### j) Thickness

For the film and laminate thickness measurements reported herein, measurements were made using a Heidenhain thickness tester.

Thin monolithic films were also analyzed by SEM cross-section measurement.

The thickness of coatings was calculated using the specific surface area of ePTFE as determined by BET, the laydown, and the density of the coating.

For example, the BET surface area of an ePTFE is 10 m²/g. Fluorolink^{®} C10 (Solvay Solexis) has a density of 1.8 g/m². Thus, a laydown of 1.8 g/m² Fluorolink^{®} C10 on a flat surface would give a coating with a thickness of 1 micrometer. Assuming that the complete pore surface, i.e. the surface of all inner and outer pores, of said ePTFE is covered with the coating, a laydown of 1.8 g/m² Fluorolink^{®} C10 will form a coating thickness of 100 nm divided by the weight of the porous ePTFE membrane. Similarily, a laydown of 3.6 g/m² Fluorolink^{®} C10 will form a coating thickness of 200 nm divided by the weight of the porous ePTFE membrane.

### k) Suter test

The Suter test was carried out according AATCC Test 127 - 1989, the membrane sample being fixed even in a holder. The membrane should resist an applied water pressure of 0.2 bar for 2 min.

### I) Microscopy

SEM pictures were made on LEO 1450 VP, samples were sputtered with gold

### m) EDX test

EDX Analysis stands for Energy Dispersive X-ray analysis. The EDAX^{®} unit (Ametek) worked as an integrated feature of the SEM. At 10 kV this technique was used for identifying the elemental composition of the specimen.

During EDX Analysis, the specimen is bombarded with an electron beam inside the scanning electron microscope. Thus, by measuring the amounts of energy present in the X-rays being released by a specimen during electron beam bombardment, the identity of the atom from which the X-ray was emitted can be established.

### n) Water contact angle

A sessile drop (4 µl) of bidistilled water was placed on the substrate at 25 °C. The contact angle was measured using a DSA 10 unit (Krüss) after 5 and 30 seconds.

### o) Viscosity

The viscosity of the reference liquids is determined by a Haake rheometer, model RheoStress 1. A plate/cone arrangement (cone designation C35/2 Ti) was used for all the measurements. All given viscosity data refer to a temperature of 25°C or 60 °C and a shear rate of 50 sec.⁻¹.

### p) Surface tension

Surface tension was measured with the processor tensiometer K 12 from KRUSS-GmbH Hamburg using Wilhelmy's plate method. A plate of exactly known geometry was brought in contact with the liquid. The force with which the liquid moves along the wetting line on the plate was measured. This force is directly proportional to surface tension of the liquid.

### EXAMPLES

### Example 1

1.0 g silver acetate (98% pure, Merck) was added to 99.0 g Fluorolink^{®} C (Solvay Solexis) and heated up to 90 °C under stirring until the silver acetate was reacted completely and no acetic acid was formed anymore. Proton exchange by silver ions was 6%. The viscosity was 124 mPas at 25 °C.

An ePTFE membrane (mean flow pore size 0.178 µm, Gurley 12 s, thickness 34 µm, area weight 20.6 g/m²) was solvent free coated with this mixture. The lay down of Fluorolink^{®} C - Ag was 4.0 g/m² after heat homogenization at 130°C.

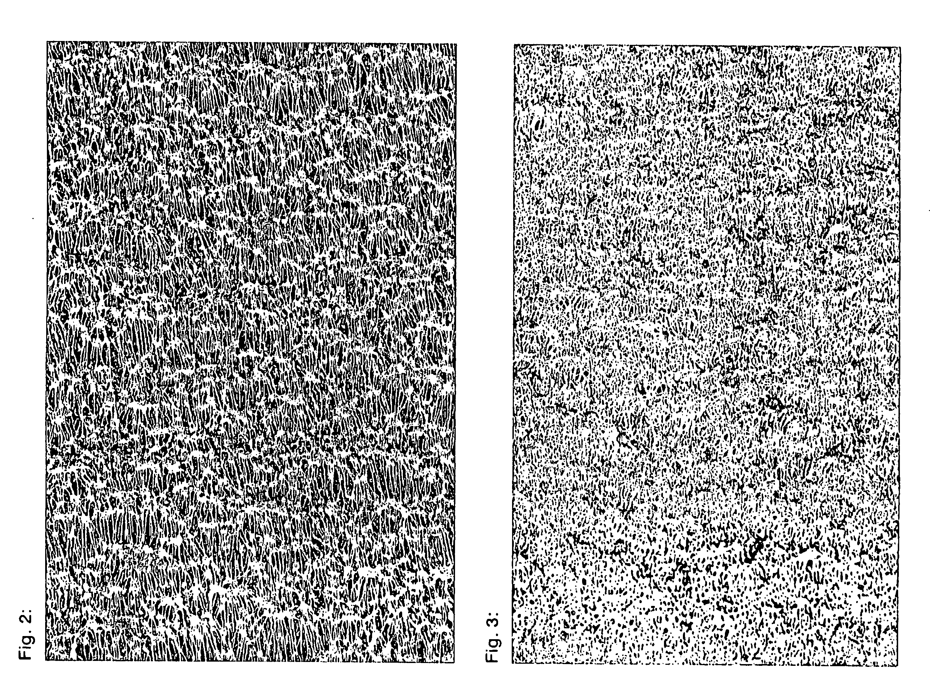

The coated membrane looks slightly yellow and has a mean flow pore size of 0.164 µm. The SEM picture of the coated membrane shown in Figure 3 indicate a uniform coating layer at the surface of the inner and outer pores. Results see Table 1.

### Comparative Example 1

The same ePTFE membrane as used in Example 1 (mean flow pore size 0.178 µm, Gurley 12 s, thickness 34 µm, area weight 20.6 g/m²) was used in Comparative Example 1.

### Example 2

10.0 g silver acetate (98% pure, Merck) was added to 90.0 g Fluorolink^{®} C (Solvay Solexis) and heated up to 90°C under stirring until the silver acetate was reacted completely and no acetic acid was formed anymore. Proton exchange by silver ions was 67%, the viscosity was 3 015 mPas at 25°C.

This example was performed to show that also higher degrees of ion exchange can be obtained easily.

### Example 3

3.0 g pulverized silver acetate (98% pure, Merck) was added to 297.0 g Fluorolink^{®} C (Solvay Solexis) and heated up to 90 to 95 °C under stirring until the silver acetate was reacted completely and no acetic acid was formed anymore. Proton exchange by silver ions was 6%.

Two different membranes were coated with this complex.

In **Example 3a** an ePTFE membrane with a water sessile drop contact angle of 138 ° (mean flow pore size 0.180 µm, Gurley 20 s, thickness 16 µm and area weight 19.3 g/m²) was solvent free coated with this mixture by transfer roll technique. The rolls were heated up to 60 °C.

The lay down of Fluorolink^{®} C - Ag complex on the ePTFE was 3.0±0.5g/m² after heat homogenization at 120°C. The coated membrane looked slightly yellow, the measured Ag concentration at the surface is 0.7 % by weight. SEM pictures indicate a uniform coating layer at the surface of the inner and outer pores. The contact angle was 139 ° against water. Results for Example 3a see Table 1.

In **Example 3b** an ePTFE membrane (Gurley 12 s, thickness 34 µm and area weight 21.1 g/m²) was solvent free coated with this mixture by the transfer roll technique. The rolls were heated up to 60 °C. The lay down of Fluorolink^{®} C - Ag at ePTFE was 4.5±0.5 g/m² after heat homogenization at 120°C, the silver concentration was found with 1.0 % by weight at the surface. Results for Example 3b see Table 1.

**Table 1:**

| Membrane | Oil rating | EDX silver concentration [weight %] | Agarose overlay test | MEM elution Results | MVTR [g/m²24 h] | Gurley [s] |
|---|---|---|---|---|---|---|
| Example 1 | 1 | 1.6 | 2 | 4 | 79 000 | |
| Comparative example 1 | 0 | 0 | 0 | 0 | 80 000 | 12 |
| Example 3a | 2 | 0.74 | Not tested | Not tested | 81 300 | 12 |
| Example 3b | 2-3 | 1.02 | Not tested | Not tested | 75 300 | 22 |

Example 1 indicates that the coated substrate interacts with living cells in the agarose overlay test and MEM elution test, whereas the uncoated uncoated substrate of Comparative Example 1 does not interact with living cells.

Example 3a and 3b show an unique combination of properties for coated articles like high air permeability, improved contamination resistance and excellent breathability of the coated membranes.

### Example 4 and 5

Both coated membranes of Examples 3a and 3b were laminated to a polyester textile (Flanell liner) using a gravure roll set up and an adhesive. The pressure applied at gravur and marriage nip was 340 kPa. These two laminates are those of Examples 4 and 5. In Comparative Example 2, a laminate was formed in the same way using the untreated membrane of Comparative Example 1.

Several test were performed on the laminates and the test results are shown in Table 2 and Table 3.

**Table 2:**

| Laminate | ePTFE membrane | Oil rating | Charge Decay Time [s at 20 % RH] | EDX silver concentration [weight %] ePTFE side | MVTR [g/m² 24 h] | MVTR [g/m²24 h] After 5 HL |
|---|---|---|---|---|---|---|
| Example 4 | Example 3a | 2 | 0.54 | 0.69 | 20 700 | 18 800 |
| Example 5 | Example 3b | 2-3 | 0.35 | 0.71 | 20 600 | 18 600 |
| Comparative example 2 | Comparative example 1 | 0 | >> | 0 | 23 800 | 17 800 |

| | | | | | | |
|---|---|---|---|---|---|---|
| HL = home laundering according at 60°C | | | | | | |

The charge decay time measurement at low humidity indicates additional antistatic laminate properties of the antimicrobial coated article comprising the complex of an ionic fluoropolyether with silver ions.

Furthermore, the oil rating of Examples 4 and 5 shows an improved oleophobicity and, in addition, the antimicrobial coating is wash durable, as can be seen from the reduced decrease in MVTR after laundering.

The antimicrobial effect of the articles of Examples 4 and 5 is illustrated by the test results in Table 3.

### Example 6

A typical weather protection laminate was fabricated. A polyamide textile was laminated to a barrier film formed from ePTFE (same as in Comparative Example 1) coated with a monolithic polyurethane layer (PUR) by the lamination process of Examples 4 and 5.

The reaction product of 315 g Fluorolink^{®} C and 35 g silver acetate (proton exchange 67 %) was dissolved in 6 650 g Galden^{®} HT 110 (Solvay Solexis) and applied to the textile side (polyamide) of the weather protection laminate by a dip coating process at 22 m/min and dried at 160 °C.

The antimicrobial coated nylon laminate passed the Suter test and showed:
Oil rating on the textile side: 4
MVTR: 16 800 g/m²24h
Charge Decay Time: 4 s
Silver surface concentration at textile side: 1.3 % by weight measured by EDX.

The laminate was washed 5 times at 60 °C. After washing the MVTR was 15 500 g/m²24h. No loss on breathbility performance was observed after washing.

After a total laundering time of 648 h, silver concentration of 0.31 % on the textile side and 0.13 % on the membrane film side was found. Thus, the silver concentration dropped from 1.3 % by weight to 0.31 % by weight during 648 h exposure to laundering conditions. This observation indicates a very slow release of silver ions over a long period of time.

**Table 3: Zone of inhibition test results**

| Sample Identity | Staphylococcus aureus | Pseudomonas aeruginosa |
|---|---|---|
| | Zones mm | Zones mm |
| Example 1 | 28 mm | 26 mm |
| Example 4 | 27 mm | 25 mm |
| Example 5 | 27 mm | 25 mm |
| Example 6 | Textile side down 30 mm | Textile side down 30 mm |
| | PUR side down 32 mm | PUR side down 33 mm |
| ePTFE membrane | 0 | 0 |

| | | |
|---|---|---|
| Note : Average size disc = 2.5 cm | | |

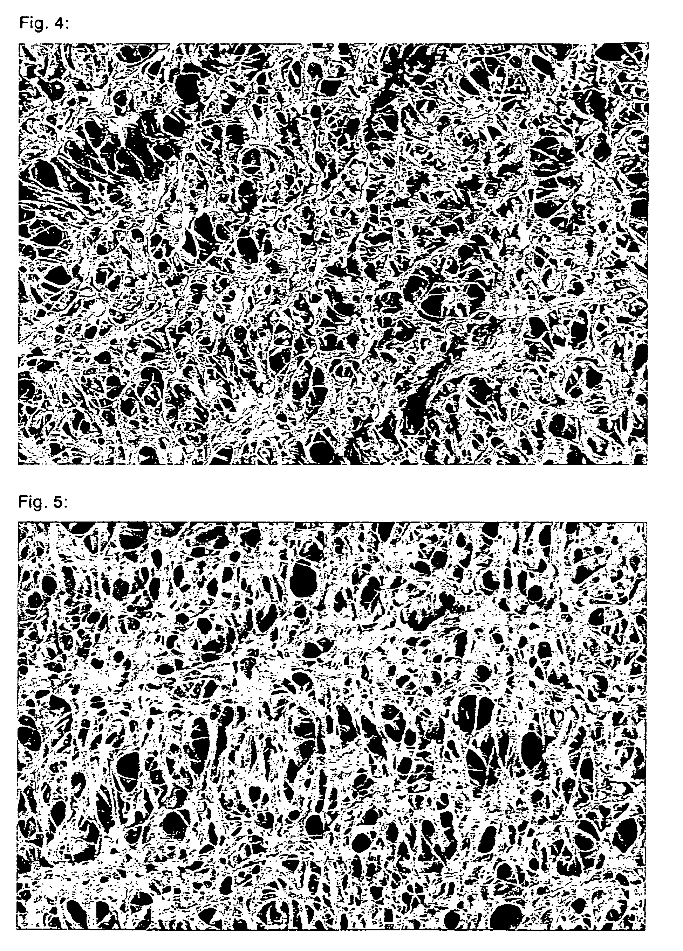

Photographs of the Zones of Inhibition Bioassay plates with both *S. Aureus* and *P. Aeruginosa* were taken and showed clear zones of inhibition for Example 1 tested. The SEM pictures (cf. Figures 4 and 5) showed the absence of bacterial biofilms on any of the materials coated with fluoropolymer - Ag.

After 5 home laundery cycles at 60 °C according to ISO 6330 the laminates showed still activity in the ZOI test (see Table 4). No bacteria growth on the coated ePTFE side (Example 4 and 5) as well as on the PUR side (Example 6) could be reported after 24 h exposure of the material onto the bacteria cultures.

**Table 4:**

| Sample Identity | Staphylococcus aureus | Pseudomonas aeruginosa |
|---|---|---|
| | Zones mm | Zones mm |
| Example 4 | 25 mm | 25 mm |
| Example 5 | 25 mm | 25 mm |
| Example 6 | PUR side down 25 mm | PUR side down 25 mm |
| ePTFE membrane | 0 | 0 |

The test results demonstrate the ability of the inventive coatings for inhibition the growth of various bacteria on fluoropolymers, polyurethanes and polyamides over a long time and after repeated wash cycles.

### Example 7

10.0 g silver acetate (>98% pure, Merck) was added to 90.0 g Fluorolink^{®} C (Solvay Solexis) and heated up to 90 °C under stirring until the silver acetate was reacted completely and no acetic acid was formed anymore. The proton exchange by Ag ions was 67 %. An ePTFE membrane (mean flow pore size 0.178 µm, Gurley 12 s, thickness 34 µm, area weight 20.6 g/m²) was solvent free coated with this mixture. The lay down of Fluorolink^{®} C - Ag was 5.4 g/m² after heat homogenization at 150 °C. The coated membrane looks slightly yellow. Oil rating was 4 on both sides, the Gurley number was 20 s.

Example 7 indicates an oleophobic and contamination resistant antimicrobial coating at air permeable ePTFE.

### Example 8

A complex of Fluorolink^{®} C 10 and Zn²⁺ was prepared by reacting 90.0 g Fluorolink^{®} C 10 and 10 g zinc acetate dihydrate (> 99.0%, Merck) according to Example 7. For results see Table 5.

**Table 5:**

| Sample | H⁺ exchange [%] | Viscosity at 60 °C [mPas] | Surface tension [mN/m] | Counter-ionic agent |
|---|---|---|---|---|
| 8 | 74 | 390 | 22.4 | Zn²⁺ |

A ePTFE membrane (area weight 18 g/m², Gurley number 13 s) coated with this complex out of a 5% by weight solution in HT 110 (Solvay Solexis), showed the following characteristics:

Lay down: 6.2 g/m², Gurley: 15 s, oil rating: 5 to 6, water wettability: < 1 s.

### Example 9

10.0 g copper acetate (> 98.0%, Fluka) was added to 90.0 g Fluorolink^{®} C 10 (Solvay Solexis) and heated up to 110 °C under stirring until the copper acetate was reacted completely and no acetic acid was formed anymore. A dark green highly viscous liquid was obtained with a proton exchange of 98 %.

A PTFE membrane (20.6 g/m², Gurley 12 s) was dip coated with a 5 % by weight solution of the Fluorolink^{®}/copper complex in isopropyl alcohol at 50 °C. The lay down at the membrane was 7 g/m² and the Gurley number was 11 s. The coated side of the membrane showed an oil rating of 3. Water wetted the membrane within 1 s.

Examples 8 and 9 show the incorporation of antimicrobial active Zn²⁺ and Cu²⁺ ions into a fluoropolyether complex at ePTFE surfaces.

Both Examples illustrate furthermore adding a water wetting function to an ePTFE membrane by different antimicrobial counter-ionic agents and ionic fluoropolyether formulations for a variety of ePTFE structures. These materials can be expected to be useful in applications, where hydropilicity is required.

### Example 10

A mixture of 168 g Flemion^{®} F950 (solids 6.0 %), 30 g water, 2 g silver acetate (99.99%), 696 g ethanol and 198 g Clevios™ PH (former Baytron^{®} PH, solid content 1.3 % by weight of the intrinsically conductive polymer PEDT/PSS [poly(3,4-ethylenedioxythiophene) poly(styrene sulfonate)] dispersed in water, mean swollen particle size d50 about 30 nm, product information brochure, available from H.C. Starck) was prepared at 40 °C. An ePTFE membrane (area weight 21.1 g/m²) was dip coated and dried in a combined oven at 100-180 °C at a speed of 0.2 m/min.

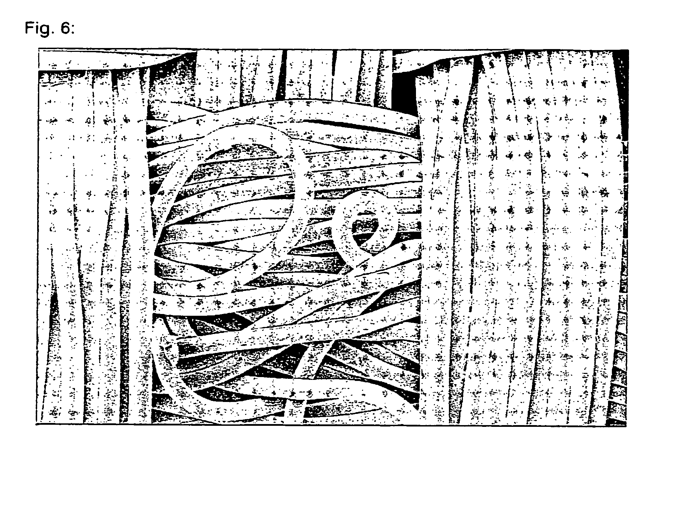

The coated membrane had a thickness of 19 µm, the lay down was 4 g/m² and the Gurley numbers are > 4 000 s. Figure 6 shows a SEM of an article with a monolithic coated surface.

### Example 11

3.5 g copper acetate (> 98.0%, Fluka) was added to 96.5 g Krytox^{®} 157 FSL (DuPont) and heated up to 120 °C under stirring until the copper acetate was reacted completely and no acetic acid was formed anymore. A dark green highly viscous liquid was obtained with an almost complete proton exchange of 100 %.

A PTFE membrane (area weight 20.6 g/m², Gurley 12 s) was dip coated with a 2.58 % by weight solution of the Krytox^{®} 157 FSL / copper complex in Galden HT 110 at room temperature. After drying for 5 min at 160 °C the coated membrane showed an oil rating of 2 and the MVRT was 79 000 g/m²24h. The coated membrane repells water strongly.

## Claims

1. An article comprising a substrate and a coating thereon comprising a complex of an ionic fluoropolymer and a counter-ionic agent comprising ions having antimicrobial activity which are selected from ions of Ag, Zn, Cu, Au, Pt, Pd, Ir, Sn and Bi and combinations of these ions or a precursor thereof with quarternized ammonium compounds and/or cationic polyelectrolytes.

2. Article according to claim 1, wherein the substrate is a fluoropolymer.

3. Article according to claim 2, wherein the substrate is polytetrafluoroethylene (PTFE).

4. Article according to any of the preceding claims, wherein the substrate is porous.

5. Article according to any of the preceding claims, wherein in the complex 5 to 100 percent of the ionic charges of the ionic fluoropolymer are balanced by the ionic charges of the counter-ionic agent.

6. Article according to any of the preceding claims, wherein the equivalent weight of the ionic fluoropolymer is in the range of 400 to 15 000 g/mol.

7. Article according to any of the preceding claims, wherein the ionic groups of the ionic fluoropolymer are anionic groups.

8. Article according to claim 7, wherein the ionic groups of the ionic fluoropolymer are selected from carboxylic, phosphoric, and sulphonic groups or mixtures thereof.

9. Article according to any of the preceding claims, wherein the F/H ratio of the ionic fluoropolymer is equal to or greater than 1.

10. Article according to claim 9, wherein the ionic fluoropolymer is perfluorinated.

11. Article according to any of the preceding claims, wherein the coating is applied in liquid form to the substrate.

12. Article according to claim 11 wherein the liquid used for coating the substrate has a surface tension of less than 35 mN/m.

13. Article according to any of the preceding claims, wherein the coating is present on the outer surface of the substrate.

14. Article according to claim 13, wherein the thickness of the coating present on the outer surface of the substrate is in the range of 0.05 to 25 micrometer.

15. Article according to any of claims 5 to 14, wherein the coating is present on the inner and outer surface of the pores.

16. Article according to claim 15, wherein the thickness of the coating present on the inner surface of the pores is above 50 nanometers.

17. Article according to claim 15 or 16, wherein the pores of the substrate are not entirely filled with the coating.

18. Article according to any of the preceding claims, wherein the counter-ionic agent further includes surface charged nanoparticles.

19. Article according to any of the preceding claims, wherein the article has a MVTR value above 15 000 g/m²24h.

20. Article according to any of the preceding claims, wherein the article has a charge decay time at 20 percent relative humidity of less than 5 seconds as measured according to DIN EN 1149-3.

21. Article according to any of the preceding claims, wherein the article shows an oil rating equal or higher than 2 measured according to the AATCC test method 119-2000.

22. Article according to any of the preceding claims, wherein the article passes the zone of inhibition test for 24 hours after 5 home laundering cycles with detergents at 60°C.

23. Article according to any of the preceding claims, wherein the ionic fluoropolymer has an equivalent weight of 800 or below.

24. Article according to any of claims 1 to 22, wherein the article has a water contact angle of 90 ° or higher.

25. Article according to claim 24, wherein the ionic fluoropolymer has an equivalent weight of 2000 g/mol or higher.

26. Process for the production of a coating on a substrate comprising the steps of
a) preparing a mixture of an ionic fluoropolymer or a precursor thereof and a counter-ionic agent comprising ions having antimicrobial activity or a precursor thereof, wherein the ions having antimicrobial activity are selected from ions of Ag, Zn, Cu, Au, Pt, Pd, Ir, Sn and Bi and combinations of these ions or a precursor thereof with quarternized ammonium compounds and/or cationic polyelectrolytes, and
b) applying the mixture prepared in step a) onto the substrate.

27. A product suitable for being exposed to contamination with micro-organisms, which comprises an article according to any of claims 1 to 25.

28. Product according to claim 27 wherein the product is a garment, a textile structure, a laminate, a filter element, a venting element, a sensor, a diagnostic device, a protective enclosure, a separation element, a consumer healthcare article, or a medical device.

29. Use of an article according to any of claims 1 to 25 for the manufacture of a product which in use is exposed to contamination with micro-organisms.

30. Use according to claim 29 wherein the product is a garment, a textile structure, a laminate, a filter element, a venting element, a sensor, a diagnostic device, a protective enclosure, a separation element, a consumer healthcare article, or a medical device.

31. Use of a composition comprising a complex of an ionic fluoropolymer and a counter-ionic agent comprising ions having antimicrobial activity which are selected from ions of Ag, Zn, Cu, Au, Pt, Pd, Ir, Sn and Bi and combinations of these ions or a precursor thereof with quarternized ammonium compounds and/or cationic polyelectrolytes as an antimicrobial coating of a substrate.

## Patentansprüche

1. Artikel mit einem Substrat und einer Beschichtung darauf, umfassend einen Komplex aus einem ionischen Fluorpolymer und einem gegenionischen Agens, das Ionen mit antimikrobieller Wirkung umfaßt, die unter Ionen von Ag, Zn, Cu, Au, Pt, Pd, Ir, Sn und Bi und Kombinationen dieser Ionen oder eines Vorläufers davon mit quaternisierten Ammoniumverbindungen und/oder kationischen Polyelektrolyten ausgewählt sind.

2. Artikel nach Anspruch 1, wobei es sich bei dem Substrat um ein Fluorpolymer handelt.

3. Artikel nach Anspruch 2, wobei es sich bei dem Substrat um Polytetrafluorethylen (PTFE) handelt.

4. Artikel nach einem der vorhergehenden Ansprüche, wobei das Substrat porös ist.

5. Artikel nach einem der vorhergehenden Ansprüche, wobei in dem Komplex 5 bis 100 Prozent der ionischen Ladungen des ionischen Fluorpolymers durch die ionischen Ladungen des gegenionischen Mittels ausgeglichen werden.

6. Artikel nach einem der vorhergehenden Ansprüche, wobei das Äquivalentgewicht des ionischen Fluorpolymers im Bereich von 400 bis 15.000 g/mol liegt.

7. Artikel nach einem der vorhergehenden Ansprüche, wobei es sich bei den ionischen Gruppen des ionischen Fluorpolymers um anionische Gruppen handelt.

8. Artikel nach Anspruch 7, wobei die ionischen Gruppen des ionischen Fluorpolymers unter Carbonsäure-, Phosphorsäure- und Sulfonsäuregruppen oder Mischungen davon ausgewählt sind.

9. Artikel nach einem der vorhergehenden Ansprüche, wobei das F/H-Verhältnis des ionischen Fluorpolymers größer gleich 1 ist.

10. Artikel nach Anspruch 9, wobei das ionische Fluorpolymer perfluoriert ist.

11. Artikel nach einem der vorhergehenden Ansprüche, wobei die Beschichtung in flüssiger Form auf das Substrat aufgebracht wird.

12. Artikel nach Anspruch 11, wobei die zum Beschichten des Substrats verwendete Flüssigkeit eine Oberflächenspannung von weniger als 35 mN/m aufweist.

13. Artikel nach einem der vorhergehenden Ansprüche, wobei die Beschichtung auf der Außenfläche des Substrats vorliegt.

14. Artikel nach Anspruch 13, wobei die Dicke der auf der Außenfläche des Substrats vorliegenden Beschichtung im Bereich von 0,05 bis 25 Mikrometer liegt.

15. Artikel nach einem der Ansprüche 5 bis 14, wobei die Beschichtung auf der Innen- und Außenfläche der Poren vorliegt.

16. Artikel nach Anspruch 15, wobei die Dicke der auf der Innenfläche der Poren vorliegenden Beschichtung über 50 Nanometer liegt.

17. Artikel nach Anspruch 15 oder 16, wobei die Poren des Substrats nicht vollständig mit der Beschichtung gefüllt sind.

18. Artikel nach einem der vorhergehenden Ansprüche, wobei das gegenionische Agens ferner oberflächengeladene Nanopartikel enthält.

19. Artikel nach einem der vorhergehenden Ansprüche, wobei der Artikel einen MVTR-Wert von mehr als 15.000 g/m²24h aufweist.

20. Artikel nach einem der vorhergehenden Ansprüche, wobei der Artikel eine gemäß DIN EN 1149-3 gemessene Ladungsabbauzeit bei 20 Prozent relativer Feuchte von weniger als 5 Sekunden aufweist.

21. Artikel nach einem der vorhergehenden Ansprüche, wobei der Artikel eine gemäß AATCC-Testmethode 119-2000 gemessene Ölnote größer gleich 2 aufweist.

22. Artikel nach einem der vorhergehenden Ansprüche, wobei der Artikel den Inhibierungszonentest nach 5 Haushaltswaschzyklen mit Waschmitteln bei 60°C über einen Zeitraum von 24 Stunden besteht.

23. Artikel nach einem der vorhergehenden Ansprüche, wobei das ionische Fluorpolymer ein Äquivalentgewicht von 800 oder weniger aufweist.

24. Artikel nach einem der Ansprüche 1 bis 22, wobei der Artikel einen Wasserkontaktwinkel von 90° oder mehr aufweist.

25. Artikel nach Anspruch 24, wobei das ionische Fluorpolymer ein Äquivalentgewicht von 2000 g/mol oder mehr aufweist.

26. Verfahren zur Herstellung einer Beschichtung auf einem Substrat, bei dem man
a) eine Mischung aus einem ionischen Fluorpolymer oder einem Vorläufer davon und einem gegenionischen Agens, das Ionen mit antimikrobieller Wirkung oder einen Vorläufer davon umfaßt, wobei die Ionen mit antimikrobieller Wirkung unter Ionen von Ag, Zn, Cu, Au, Pt, Pd, Ir, Sn und Bi und Kombinationen dieser Ionen oder eines Vorläufers davon mit quaternisierten Ammoniumverbindungen und/oder kationischen Polyelektrolyten ausgewählt sind, herstellt und
b) die in Schritt a) hergestellte Mischung auf das Substrat aufbringt.

27. Produkt, das Kontamination mit Mikroorganismen ausgesetzt werden kann und einen Artikel nach einem der Ansprüche 1 bis 25 umfaßt.

28. Produkt nach Anspruch 27, wobei es sich bei dem Produkt um ein Kleidungsstück, eine Textilstruktur, ein Laminat, ein Filterelement, ein Entlüftungselement, einen Sensor, eine diagnostische Vorrichtung, eine Schutzhülle, ein Trennelement, einen Verbrauchergesundheitspflegeartikel oder eine medizinische Vorrichtung handelt.

29. Verwendung eines Artikels nach einem der Ansprüche 1 bis 25 zur Herstellung eines Produkts, das bei der Verwendung Kontamination mit Mikroorganismen ausgesetzt ist.

30. Verwendung nach Anspruch 29, wobei es sich bei dem Produkt um ein Kleidungsstück, eine Textilstruktur, ein Laminat, ein Filterelement, ein Entlüftungselement, einen Sensor, eine diagnostische Vorrichtung, eine Schutzhülle, ein Trennelement, einen Verbrauchergesundheitspflegeartikel oder eine medizinische Vorrichtung handelt.

31. Verwendung einer Zuusammensetzung, umfassend einen Komplex aus einem ionischen Fluorpolymer und einem gegenionischen Agens, das Ionen mit antimikrobieller Wirkung umfaßt, die unter Ionen von Ag, Zn, Cu, Au, Pt, Pd, Ir, Sn und Bi und Kombinationen dieser Ionen oder eines Vorläufers davon mit quaternisierten Ammoniumverbindungen und/oder kationischen Polyelektrolyten ausgewählt sind, als antimikrobielle Beschichtung eines Substrats.

## Revendications

1. Article comprenant un substrat et par-dessus un revêtement comprenant un complexe d'un fluoropolymère ionique et d'un agent contre-ionique comprenant des ions ayant une activité antimicrobienne qui sont choisis parmi les ions d'Ag, Zn, Cu, Au, Pt, Pd, Ir, Sn et Bi et les combinaisons de ces ions ou un précurseur de ceux-ci avec des composés d'ammonium quaternisés et/ou des polyélectrolytes cationiques.

2. Article selon la revendication 1, dans lequel le substrat est un fluoropolymère.

3. Article selon la revendication 2, dans lequel le substrat est le polytétrafluoroéthylène (PTFE).

4. Article selon l'une quelconque des revendications précédentes, dans lequel le substrat est poreux.

5. Article selon l'une quelconque des revendications précédentes dans lequel, dans le complexe, 5 à 100 pour cent des charges ioniques du fluoropolymère ionique sont équilibrées par les charges ioniques de l'agent contre-ionique.

6. Article selon l'une quelconque des revendications précédentes, dans lequel le poids équivalent du fluoropolymère ionique se situe dans la gamme de 400 à 15 000 g/mol.

7. Article selon l'une quelconque des revendications précédentes, dans lequel les groupes ioniques du fluoropolymère ionique sont des groupes anioniques.

8. Article selon la revendication 7, dans lequel les groupes ioniques du fluoropolymère ionique sont choisis parmi les groupes carboxylique, phosphorique et sulfonique ou les mélanges de ceux-ci.

9. Article selon l'une quelconque des revendications précédentes, dans lequel le rapport F/H du fluoropolymère ionique est égal ou supérieur à 1.

10. Article selon la revendication 9, dans lequel le fluoropolymère ionique est perfluoré.

11. Article selon l'une quelconque des revendications précédentes, dans lequel le revêtement est appliqué au substrat sous forme liquide.

12. Article selon la revendication 11, dans lequel le liquide utilisé pour revêtir le substrat a une tension superficielle inférieure à 35 mN/m.

13. Article selon l'une quelconque des revendications précédentes, dans lequel le revêtement est présent sur la surface extérieure du substrat.

14. Article selon la revendication 13, dans lequel l'épaisseur du revêtement présent sur la surface extérieure du substrat se situe dans la gamme de 0,05 à 25 micromètres.

15. Article selon l'une quelconque des revendications 5 à 14, dans lequel le revêtement est présent sur la surface intérieure et extérieure des pores.

16. Article selon la revendication 15, dans lequel l'épaisseur du revêtement présent sur la surface intérieure des pores est supérieure à 50 nanomètres.

17. Article selon la revendication 15 ou 16, dans lequel les pores du substrat ne sont pas entièrement remplis avec le revêtement.

18. Article selon l'une quelconque des revendications précédentes, dans lequel l'agent contre-ionique comprend en outre des nanoparticules chargées en surface.

19. Article selon l'une quelconque des revendications précédentes, l'article ayant une valeur de coefficient de transmission de la vapeur d'eau supérieure à 15 000 g/m²/24 h.

20. Article selon l'une quelconque des revendications précédentes, l'article ayant un temps de décroissance de la charge à 20 pour cent d'humidité relative inférieur à 5 secondes, comme mesuré selon la norme DIN EN 1149-3.

21. Article selon l'une quelconque des revendications précédentes, l'article affichant une note d'oléophobie égale ou supérieure à 2, mesurée selon la méthode d'essai AATCC 119-2000.

22. Article selon l'une quelconque des revendications précédentes, l'article passant l'essai de la zone d'inhibition pendant 24 heures après 5 cycles de lavage domestique avec des détergents à 60 °C.

23. Article selon l'une quelconque des revendications précédentes, dans lequel le fluoropolymère ionique a un poids équivalent de 800 ou moins.

24. Article selon l'une quelconque des revendications 1 à 22, l'article ayant un angle de contact de l'eau de 90° ou plus.

25. Article selon la revendication 24, dans lequel le fluoropolymère ionique a un poids équivalent de 2000 g/mol ou plus.

26. Procédé de production d'un revêtement sur un substrat comprenant les étapes consistant à
a) préparer un mélange d'un fluoropolymère ionique ou d'un précurseur de celui-ci et d'un agent contre-ionique comprenant des ions ayant une activité antimicrobienne ou d'un précurseur de celui-ci, les ions ayant une activité antimicrobienne étant choisis parmi les ions d'Ag, Zn, Cu, Au, Pt, Pd, Ir, Sn et Bi et les combinaisons de ces ions ou des précurseurs de ceux-ci avec des composés d'ammonium quaternisés et/ou des polyélectrolytes cationiques, et
b) appliquer le mélange préparé à l'étape a) sur le substrat.

27. Produit approprié pour être exposé à une contamination par des microorganismes, qui comprend un article selon l'une quelconque des revendications 1 à 25.

28. Produit selon la revendication 27, le produit étant un vêtement, une structure textile, un stratifié, un élément filtrant, un élément de ventilation, un capteur, un dispositif de diagnostic, une enveloppe protectrice, un élément de séparation, un article de consommation de soins de santé, ou un dispositif médical.

29. Utilisation d'un article selon l'une quelconque des revendications 1 à 25 pour la fabrication d'un produit qui, à l'emploi, est exposé à une contamination par des microorganismes.

30. Utilisation selon la revendication 29 dans laquelle le produit est un vêtement, une structure textile, un stratifié, un élément filtrant, un élément de ventilation, un capteur, un dispositif de diagnostic, une enveloppe protectrice, un élément de séparation, un article de consommation de soins de santé, ou un dispositif médical.

31. Utilisation d'une composition comprenant un complexe d'un fluoropolymère ionique et d'un agent contre-ionique comprenant des ions ayant une activité antimicrobienne qui sont choisis parmi les ions d'Ag, Zn, Cu, Au, Pt, Pd, Ir, Sn et Bi et les combinaisons de ces ions ou un précurseur de ceux-ci avec des composés d'ammonium quaternisés et/ou des polyélectrolytes cationiques comme revêtement antimicrobien d'un substrat.
